# EUROPEAN PATENT APPLICATION

(11) **EP 3 868 631 A1**
(43) Date of publication of application: **25.08.2021**
(21) Application number: 19872747.1
(22) Date of filing: 07.10.2019
(51) Int. Cl.: B61L 23/00, B60L 3/00, B61D 37/00, G01S 17/87, G01S 17/93

(54) **OBSTACLE SENSING SYSTEM AND OBSTACLE SENSING METHOD FOR TRACK TRAVELING VEHICLE**

(30) Priority: 15.10.2018 JP 2018193977
(71) Applicant: Hitachi, Ltd., Tokyo 100-8280 (JP)
(72) Inventor: ONO, Yukihiko, Tokyo 100-8280 (JP)
(74) Representative: Mewburn Ellis LLP
(86) International application number: PCT/JP2019/039549
(87) International publication number: WO 2020/080168

(57) **Abstract**

To provide an obstacle detection system for a guide-way traveling vehicle and an obstacle detection method in which an object crossing the guide-way can appropriately be judged as an obstacle. An obstacle on the guide-way is detected based on a signal from a first detector which is mounted on a vehicle traveling on the guide-way and creates a first side boundary detection range for detecting an object entering the guide-way from a right side and a signal from a second detector which is mounted on the vehicle and creates a second side boundary range for detecting an object entering the guide-way from a left side. Alternatively, in front of a vehicle traveling on the guide-way, a first side boundary detection range for detecting an object entering the guide-way from a right side and a second side boundary detection range for detecting an object entering the guide-way from a left side are formed. When the object is detected in one of the first side boundary detection range and the second side boundary detection range, it is judged that the obstacle has entered the guide-way.

## Description

### Technical Field

The present invention relates to an obstacle detection system and an obstacle detection method for detecting an obstacle on a guide-way.

### Background Art

In a guide-way transport system in which a vehicle travels on a guide-way, when there is an obstacle on the guide-way, it is impossible to avoid the obstacle by steering. For this reason, detecting an obstacle is important to improve security and operability of a train. Conventionally, while operating a train, a driver visually checks a guide-way and a course to confirm that there is no obstacle present. Nevertheless, it is difficult to always supervise all the ranges within a traveling road surface, and there is a possibility that an obstacle is found late, which may lead to a collision of the guide-way transport system and the obstacle. With respect to the obstacle detection technology of a railroad, there has been known an obstacle detection system which runs before a vehicle starts traveling, confirms the presence or absence of an abnormality on a rail by automatic running and, when there is an obstacle within a construction gauge, automatically stops the vehicle. For example, Patent Literature 1 describes a technology disclosing an obstacle detection system in which, while a vehicle is being self-driven, an obstacle is detected by a short-distance photographing unit photographing in a short-distance range, a long-distance photographing unit photographing in a long-distance range, and a LIDAR irradiating laser light within a shorter-distance range.

Also, studies of the front obstacle detection system for vehicles have been in progress for automatic driving system. In those studies, generally, a camera, a millimeter wave-radar, a LIDAR, etc. are used, and detection distances of these sensors are disclosed by various media. For example, in the case of the millimeter wave-radar and the camera which are sensors with a long detection distance function, long-distance detection of about 200 m is possible.

Patent Literature 1 discloses a technology in which judgment lines are set at a plurality of distances ahead of the vehicle, and an object is judged as an obstacle when the object crosses the judgment lines.

### Citation List

### Patent Literature

PTL 1: Japanese Patent Application Laid-Open No. 2016-88183

### Summary of Invention

### Technical Problem

According to the technology of Patent Literature 1, however, it is sometimes difficult to judge an object crossing the guide-way as an obstacle.

The present invention was made in view of the above, and an object thereof is to provide an obstacle detection system and an obstacle detection method for a guide-way traveling vehicle, in which an object crossing the guide-way can be appropriately judged as an obstacle.

### Solution to Problem

In order to solve the above problem, for example, constitutions described in the claims are adopted. The present application includes a plurality of means to solve the above problem, and one example is an obstacle detection system for a guide-way traveling vehicle detecting an obstacle on the guide-way, based on a signal from a first detector which is mounted on the transport vehicle traveling on the guide-way and creates a first side boundary detection range for detecting an object entering the guide-way from a right side and a signal from a second detector which is mounted on the vehicle and creates a second side boundary detection range for detecting an object entering the drive-way from a left side.

### Advantageous Effects of Invention

According to the present invention, it becomes possible to provide an obstacle detection system and an obstacle detection method for a guide-way traveling vehicle, in which an object crossing the guide-way can be appropriately judged as an obstacle.

### Brief Description of Drawings

Fig. 1 shows one example of an obstacle detection unit and a system configuration of a guide-way transport system according to an embodiment of the present invention;
Fig. 2 shows one example of an obstacle detection unit and a processing flow of a transport vehicle operation control means in the guide-way transport system according to an embodiment of the present invention;
Fig. 3 shows one example of an obstacle detection unit and a processing flow of the obstacle detection unit in the guide-way transport system according to an embodiment of the present invention;
Fig. 4 shows one example of an obstacle detection unit and an obstacle sensor installation of the guide-way transport system according to an embodiment of the present invention;
Fig. 5 shows one example of an obstacle detecting unit and an obstacle sensor installation of the guide-way transport system during a turning guide-way traveling according to an embodiment the present invention; and
Fig. 6 shows one example of an obstacle detection unit and detection in a side boundary detection range during a turning guide-way traveling of the guide-way transport system according to an embodiment of the present invention.

### Description of Embodiment

Hereafter, an embodiment will be explained in which an object crossing a guide-way can be appropriately judged as an obstacle.

Incidentally, according to the conventional obstacle detection system, detectable distances of the camera, the millimeter-wave radar, and the LIDAR included in the system depend on the color and contour of the object to be detected as well as the reflection rates of the millimeter wave and the laser. Therefore, it has been difficult to detect the obstacle stably. In the transport system of the embodiment to be explained below, an obstacle detection unit and a guide-way transport system which detect the obstacle and conduct braking without depending on the color, contour, and reflection rate of the detected object can also be provided.

The constitution of the embodiment will be explained below with reference to the drawings.

### (Embodiment 1)

In the present embodiment, an explanation will be given to a guide-way transport system 101 which includes a transport vehicle 102 and an obstacle detection unit 103, and which greatly improves reliability of the obstacle detection of the obstacle detection unit.

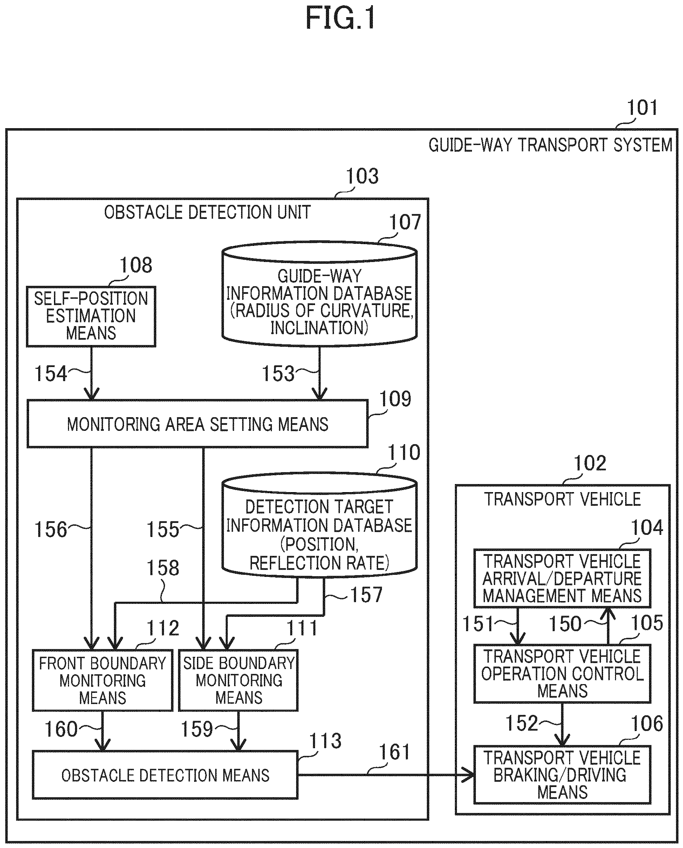

First, with reference to Fig. 1, a configuration of the guide-way transport system 101 and a role of each constituent element will be explained.

The transport vehicle 102 is a vehicle which transports passengers or cargo traveling along a fixed guide-way.

The obstacle detection unit 103 is a unit which is provided in the front of the transport vehicle 102 and detects an obstacle.

When the obstacle detection unit 103 detects an obstacle which disturbs the traveling of the transport vehicle 102, information about presence of the obstacle is sent to the transport vehicle 102 from the obstacle detection unit 103, and an urgency stop of the transport vehicle 102 is made. The transport vehicle 102 includes a transport vehicle arrival/departure management means 104, a transport vehicle operation control means 105, and a transport vehicle braking/driving means 106.

The obstacle detection unit 103 includes a guide-way information database 107, a self-position estimation means 108, a monitoring area setting means 109, a detection target information database 110, a side monitoring means 111, a front monitoring means 112, and an obstacle detection means 113.

The transport vehicle arrival/departure management means 104 is a means to manage arrival/departure time at a station of the transport vehicle 102. A box for exclusive use and a base plate are installed in the transport vehicle. Also, it may be realized as one function of the existing vehicle information control system. The transport vehicle arrival/departure management means 104 informs the transport vehicle operation control means 105 of a transport vehicle departure schedule time 151 from a station concerned while the transport vehicle 102 is staying at the station. Moreover, the transport vehicle arrival/departure management means 104 acquires a transport vehicle arrival schedule time 150 for the next station from the transport vehicle operation control means 105.

The transport vehicle operation control means 105 is a means to generate a braking/driving instruction for the transport vehicle 102, and an ATO unit (automatic train operating unit) is given as such an example. The generated transport vehicle braking/driving instruction 152 is conveyed to the transport vehicle braking/driving means 106.

The transport vehicle operation control means 105 starts the transport vehicle 102 based on the transport vehicle departure schedule time 151 acquired from the transport vehicle arrival/departure management means 104. Moreover, between stations, a braking/driving instruction is generated so that the transport vehicle 102 may travel along a target traveling pattern defined by a position and a speed. Although not shown in Fig. 1, in order to travel along the target traveling pattern, a function for detecting the position and speed of the transport vehicle 102 is held inside.

The target traveling pattern is created in accordance with a pattern based on the speed of acceleration and deceleration of the transport vehicle 102 known beforehand and the speed limit of a traveling course. On such conditions, a permissive highest speed of the transport vehicle 102 is computed from a position of the transport vehicle 102 and a maximum deceleration speed of the transport vehicle 102. The resultant highest speed is reflected on the target traveling pattern of the transport vehicle 102.

The transport vehicle braking/driving means 106 brakes/drives the transport vehicle 102 based on a transport vehicle braking/driving instruction 152 acquired from the transport vehicle operation control means 105. An inverter, a motor, and a friction brake are examples of specific units of the transport vehicle braking/driving means 106.

Moreover, obstacle information 161 is inputted to the transport vehicle braking/driving means 106 from the obstacle detection means 113. When the transport vehicle 102 is staying at a station and the content of the obstacle information 161 is "Obstacle: present", it is regarded as a braking state and the transport vehicle 102 is prevented from departing. When the transport vehicle 102 is traveling between stations and the content of the obstacle information 161 is "Obstacle: present", braking is given with maximum deceleration to stop the transport vehicle 102.

The monitoring area setting means 109 acquires guide-way information 153 including a radius of curvature, a gradient, etc. of the guide-way corresponding to a current position of the transport vehicle estimated by the self-position estimation means 108 from the guide-way information database 107, and sets an obstacle monitoring area for detecting an obstacle. Although it is common that computation of the current position 154 is performed based on the integration of a vehicle speed, other methods may be used. For example, a global positioning system (GPS) etc. may be used. In the present invention, so long as the current position of the transport vehicle is uniquely determined, any methods may be adopted.

The side boundary monitoring means 111 and the front boundary monitoring means 112 have functions capable of detecting obstacles in the boundary detection ranges 155 and 156 set in the side boundary and the front boundary of the monitoring area using a camera, a laser radar, a millimeter-wave radar, etc.

The obstacle detection means 113 judges presence or absence of an obstacle in the monitoring area based on monitoring results 159 and 160 by the side boundary monitoring means 111 and the front boundary monitoring means 112.

When an obstacle which disturbs the operation of the transport vehicle 102 is detected, the obstacle detection means 113 sends the information of "Obstacle: present" to the transport vehicle braking/driving means 106.

The above-stated is a configuration of the guide-way transport system 101 and an explanation of each constituent element.

Next, a processing flow of the transport vehicle operation control means 105 will be explained.

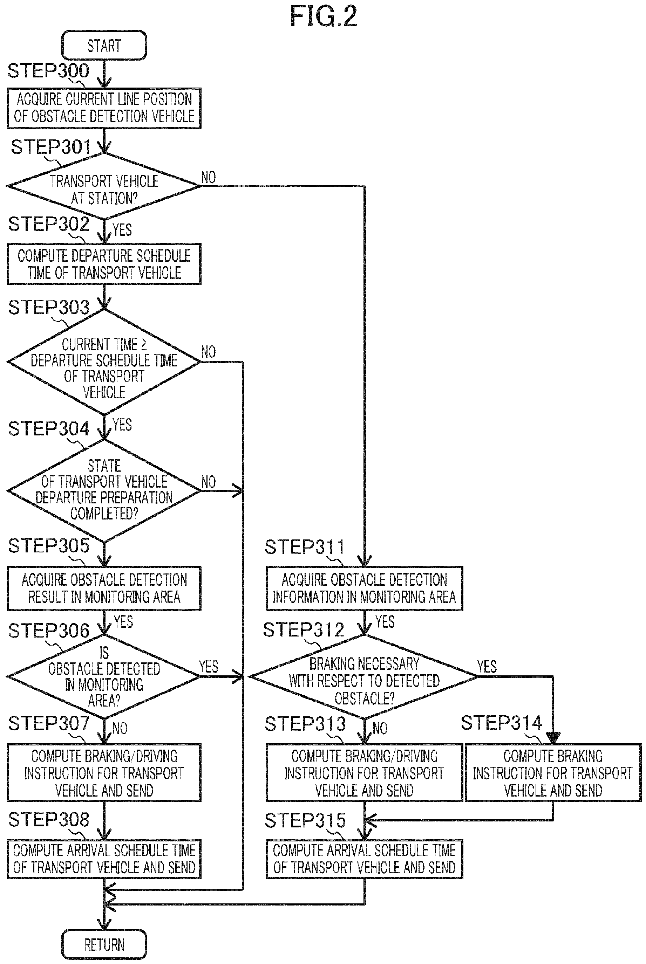

First, with reference to Fig. 2, an example of the processing flow of the transport vehicle operation control means 105 will be explained. In the transport vehicle operation control means 105, the processing shown in Fig. 2 is executed in predetermined cycles.

In step 300, a transport vehicle current line position 152 is acquired from the transport vehicle operation control means 108.

In step 301, it is judged whether or not the transport vehicle 102 is staying at a station. This judgment is made based on the position and the speed of the transport vehicle 102 held by the transport vehicle operation control means 105. Specifically, if the position is near the station and the speed is zero, the transport vehicle 102 is judged to be staying at the station.

In step 301, when judged to be staying at the station, in step 302, a schedule time at which the transport vehicle 102 leaves the currently staying station (transport vehicle departure schedule time 152) is acquired from the transport vehicle arrival/departure management means 104.

In step 303, it is judged whether or not the current time has passed the transport vehicle departure schedule time 152. When not having passed, this processing flow is skipped. When having passed the schedule time, the procedure goes to step 304.

In step 304, it is judged whether or not the transport vehicle 102 has completed departure preparation. As an example of the departure preparation, confirmation of a closed state of vehicle doors is given. When the preparation has not been completed, this processing flow is skipped. When the departure preparation has been completed, the procedure goes to step 305.

In step 307, an obstacle detection result 161 is acquired from the obstacle detection means 113.

In step 306, whether or not an obstacle is present on the guide-way is judged based on the obstacle detection result 161. When the obstacle is present, the procedure goes to step 307. When judged that an obstacle is not present, the procedure goes to step 308.

In step 306, when judged that an obstacle is present, it is necessary to stop the transport vehicle immediately. Therefore, a stop instruction is generated and sent to the transport vehicle 101.

In step 307, a transport vehicle braking/driving instruction 151 is computed and sent to the transport vehicle braking/driving means 106. Specifically, for allowing the transport vehicle to leave a station, a power-running instruction is sent.

In subsequent step 308, based on the timing at which the transport vehicle 102 has left and the schedule traveling time between the stations from then on, the schedule arrival time (transport vehicle schedule arrival time 154) at a next station is computed and sent to the transport vehicle arrival/departure management means 104.

Next, in step 301, processing (step 311 to step 315) when the transport vehicle 102 is not staying at the station will be explained.

In step 311, obstacle detection information in the monitoring area is acquired from the obstacle detection unit 103.

In step 312, as a result of judging the necessity for braking of the transport vehicle 102 based on the obstacle detection information, when judged that braking is required, the procedure goes to step 313. When judged that an obstacle is not present or braking is not required, the procedure goes to step 314.

In step 313, a transport vehicle braking/driving instruction 153 is computed and sent to the transport vehicle braking/driving means 106. That is, the braking/driving instruction is computed by a proportional control etc. so that the predetermined speed of the transport vehicle 102 becomes a predetermined target speed. First, according to the computation method of the target speed, a target speed is computed based on a position of the transport vehicle 102 and a target traveling pattern determined beforehand.

In step 314 where an obstacle is detected by the obstacle detection unit, a transport vehicle braking instruction 152 is computed and sent to the transport vehicle braking/driving means 106. In this regard, specifically, the braking instruction is computed so that the transport vehicle may be decelerated with maximum deceleration and stopped.

In step 315, from the position and speed of the transport vehicle 102 at that time, the time for the transport vehicle 102 to arrive at a next station is estimated, and it is sent to the transport vehicle arrival/departure management means 104.

The above-stated is an explanation of the example of the control flow of the transport vehicle operation control means 105.

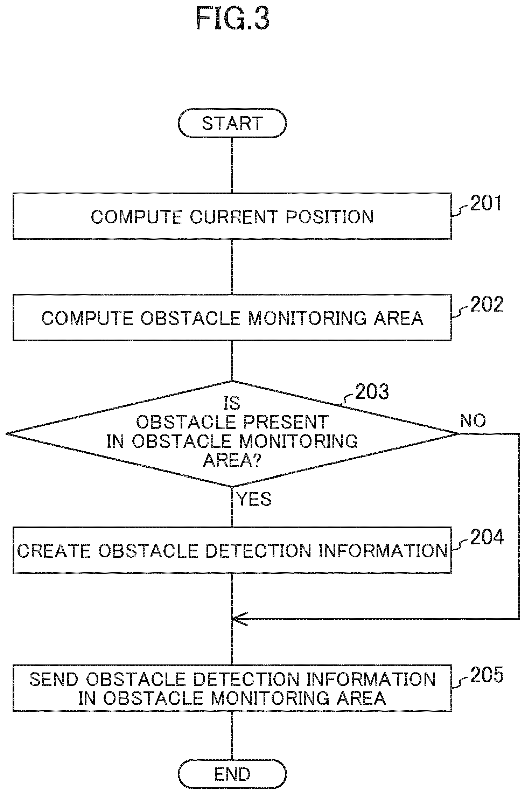

Next, an operation of the obstacle detection unit will be explained. Fig. 3 is a flowchart which shows processing performed by the obstacle detection unit 102.

The stop instruction to the transport vehicle is created in steps 201 to 205. This processing is performed for every measuring cycle of the obstacle detection unit 102. The operation based on the flowchart of Fig. 3 is as follows.

In step 201, by a self-position estimation means 108, a current position of the transport vehicle 102 is computed which is required for computing the obstacle detection area. Although it is common that computation of the current position is performed based on the integration of a vehicle speed, other methods may be used. For example, a global positioning system (GPS) etc. may be used. In the present invention, so long as the current position of the transport vehicle is uniquely determined, any methods may be adopted. The procedure goes to step 202.

In step 202, an obstacle monitoring area is set based on guide-way information corresponding to the current position of the transport vehicle computed in step 202.

For example, it is conceivable to set a construction gauge as a side boundary of the obstacle monitoring area, and to set a distance for the transport vehicle to be stopped as an traveling-direction boundary of the obstacle monitoring area.

In step 203, sensor information about an obstacle from an obstacle detection sensor in the boundary detection range set as a boundary of the obstacle monitoring area is acquired, and whether or not the obstacle has entered the obstacle monitoring area is judged. As a result of judging whether or not an obstacle is present in step 203, when judged that an obstacle is present, the procedure goes to step 204. When judged that an obstacle is not present, the procedure goes to step 205.

A width of the boundary detection range is supposed to be the one with which, from a maximum moving speed of an obstacle assumed to cross the range and from a sensing periodic time of an obstacle detection sensor, an obstacle is detected at least once when entering the boundary.

As for the width of the boundary detection range, at a station, for example, it is desirable to let it vary according to a current position of the transport vehicle. That is, to set it from several centimeters to tens of centimeters (more specifically, 10 cm) assuming that passengers are waiting at a platform, and to set it widely (for example, 1 m) near a crossing assuming that an automobile etc. are crossing.

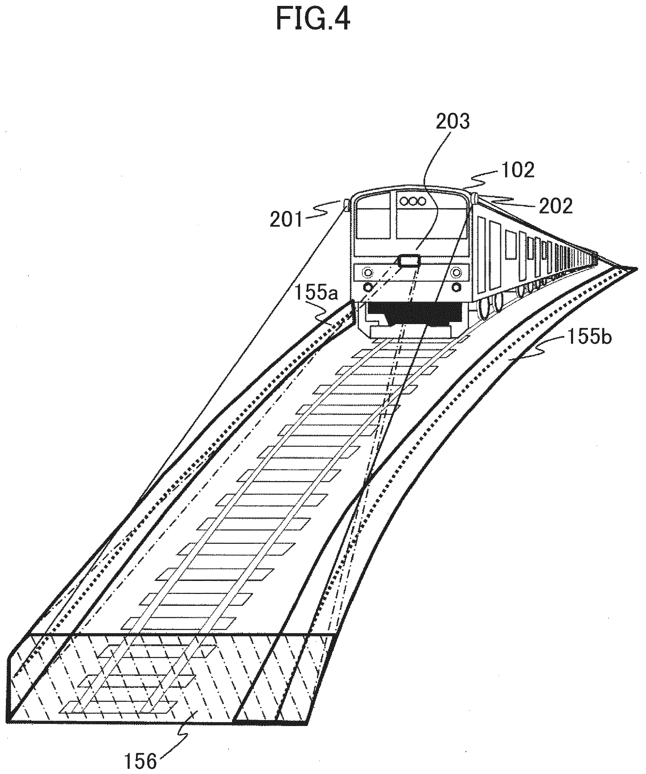

For sensors which detect the presence of the side obstacle in the boundary detection range, in consideration of a contour of the boundary detection range being a rectangle with a width of tens of centimeters and a depth of 100 m, as shown in Fig. 4, the detectors 201 and 202 are used which are two sets of LIDARs installed downwardly in the front at a high position on right and left of the transport vehicle so that the side boundary detection range 155 on either side can be detected. Here, when the detection result in the boundary detection range fills one of the following (Condition 1) to (Condition 3), compared with the case where an obstacle is not present, it is judged that the obstacle has entered.

(Condition 1) Detection points in the boundary detection range are not detected. (Condition 2) Positions of the detection points in the boundary detection range differ. (Condition 3) Reflection intensities of the detection points in the boundary detection range differ.

Here, as the transport vehicle increases speed, the stop distance of the transport vehicle becomes longer and the obstacle monitoring area is expanded. Therefore, when reflection rates of a road surface on which an obstacle is not present or a laser of an installed object are small, for example, a permissible traveling speed will have to be lowered so as not to mistakenly judge that an obstacle has entered based on Condition 1.

In order to avoid the above-described, following (Measure 1) and (Measure 2) are considered.

(Measure 1) Only the position of a known object (a rail, a traffic sign, etc.) having a detective rate equal to or higher than a certain value in a side boundary detection range is considered as a detection target. (Measure 2) An object having a detective rate equal to or higher than a certain value is installed in the side boundary detection range as a detection target.

In either case, the position of the detection target and its reflection rate are stored beforehand in the detection target information database 110, and only when the position of the detection target is included in the boundary detection range at the current position of the transport vehicle, the detection target is used for judgment of obstacle entrance.

As for the current position computation of the transport vehicle required for the obstacle detection area computation performed in step 201, the computation accuracy of the position and reliability can be raised by using these detection objects as landmarks.

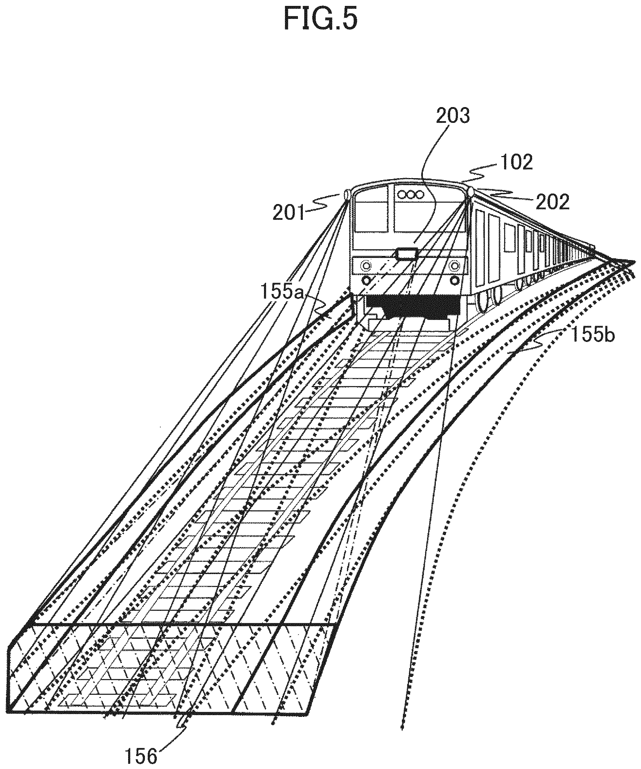

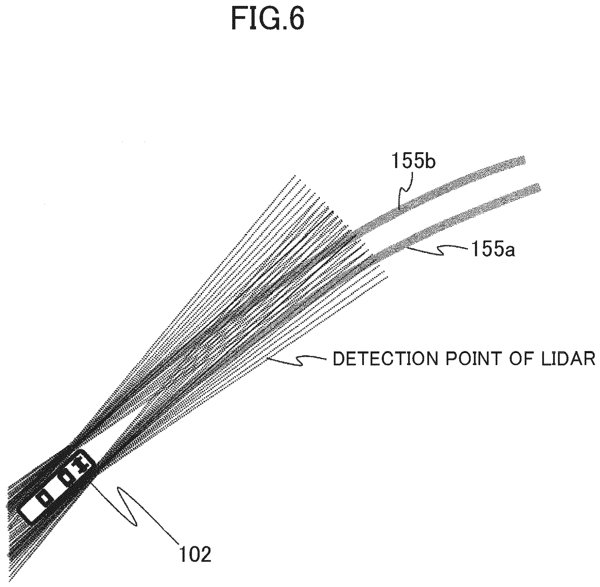

Moreover, like a curved guide-way, when a boundary assumes a curved form, a multi-layer type LIDAR is used, and as a plurality of straight lines show in Fig. 5 and Fig. 6, entrance of an obstacle is judged using detection points in the boundary detection range over a plurality of layers.

The road surface detection point made by each detection layer irradiated from the multi-layer type LIDAR is shown in Fig. 6 by the dotted line. However, the detection layers passing over the boundary detection ranges 155a and 155b vary according to the distance from a vehicle and, in order to judge entrance of an obstacle, the detection points of the plurality of layers are monitored. If the straight line (optical path of a laser) which connects the detection point and the LIDAR passes, even when the detection point of the LIDAR is in a boundary detection range, along the outside of the boundary detection range, it is not used for entrance judgment of an obstacle. This is for preventing incorrect detection caused by an object outside the boundary detection range.

Also, in detection of the side boundary detection range 155, a plurality of stereoscopic cameras, millimeter-wave radars, and laser distance meters may be used. Further, these sensors may be attached to an automatic universal head, and the side boundary detection range 157 may be scanned.

As a sensor which detects the presence of the front obstacle in the front boundary detection range 156, a simple eye camera (an infrared light is included) of narrow angle and a stereoscopic camera, a millimeter-wave radar, a LIDAR, a laser distance meter, etc. can be considered.

Using these several different kinds of sensors, with either of the detection results (color, a detection position, a distance, reflection intensity of a laser or a millimeter wave) of a sensor which has detected the front detection range differs from the case where an obstacle is not present, it is judged that the obstacle has entered the monitoring area. As a result, a detection rate can be raised with using the detection result of several different kinds of sensors and, further, an incorrect detection rate can be lowered by using AND of the detection result currently detected.

In this regard, like the case of the entrance judgment of the side obstacle, as the transport vehicle increases speed, the stop distance becomes longer and the obstacle monitoring area is expanded farther. Therefore, when reflection rates of a road surface on which an obstacle is not present or an installed object are small, following measures 1 and 2 are considered so as not to mistakenly judge that an obstacle has entered based on Condition 1.

(Measure 1) Only the position of a known object (a rail, a traffic sign, etc.) having a detective rate equal to or higher than a certain value in a side boundary detection range is considered as a detection target. (Measure 2) An object having a detective rate equal to or higher than a certain value is installed in the side boundary detection range as a detection target.

In either case, the position of the detection target and its reflection rate etc. are stored beforehand in the detection target information database 110, and only when the position of the detection target is included in the boundary detection range at a current position of the transport vehicle, the detection target is used for judgment of the obstacle entrance.

In step 203, when judged that an obstacle is present, it is necessary to stop the transport vehicle. Therefore, in step 204, obstacle detection information is created. On the other hand, when judged that an obstacle is not present, the procedure goes to step 205.

In step 205, obstacle detection information in the obstacle monitoring area is sent to the transport vehicle 101.

The above-stated is an explanation of an example of the flow of the obstacle detection operation executed by the obstacle detection unit 102.

The above-stated are explanations of the obstacle detection unit 102 and the guide-way transport system 101.

The obstacle detection system according to the embodiment described above detects an obstacle on a guide-way, based on a signal from a first detector 201 which is mounted on the transport vehicle 102 traveling on the guide-way and creates a first side boundary detection range 155a for detecting an object entering the guide-way from a right side of the traveling direction, and a signal from a second detector 202 which is mounted on the transport vehicle 102 and creates a second side boundary detection range 155b for detecting an object entering the guide-way from a left side of the traveling direction. In this way, the side boundary detection ranges 155 on the right and left of the guide-way can perform a role like a virtual fence and, when an obstacle is detected in one of side boundary detection ranges, it can be judged that the obstacle has crossed the virtual fence, and whether or not the obstacle has entered the virtual fence (i.e., on the guide-way) can be judged.

Further, if an obstacle on the guide-way is detected based on a signal from the third detector 203 creating a front boundary detection range in the front of the traveling direction of the guide-way, it becomes possible to detect also an obstacle which has already been on the guide-way. That is, a front boundary detection range 156 in the front of the traveling direction of the guide-way is formed, and by detecting an object with at least one of the front boundary detection range 156, the first side boundary detection range 155a, and the second side boundary detection range 155b, it can be judged that the obstacle has entered the range surrounded by these three kinds of boundary detection ranges. This can also be interpreted that a range on the guide-way only a predetermined distance ahead of a lead vehicle of the transport vehicle 102 is in a state surrounded by the virtual fence. Unless an object crosses the virtual fence, it is considered that there is no obstacle in the surrounded range, and traveling can be continued.

It is desirable that the distance between the above front boundary range 156 and the transport vehicle 102 is changed according to a speed of the transport vehicle 102, the speed of the transport vehicle 102 being a variable of a function. This is for the purpose of coping with the situation where the greater the speed is, the longer the braking distance becomes.

In this regard, as for the detection in the side boundary detection range 155, judgment of whether or not an object has entered may be made from the detection of presence or absence of a known object. For example, a state of continuously detecting the object to which an reflecting material is applied in the side boundary detection range 155 is considered to be a normal condition. When the detection is discontinued, it is judged that the reason of discontinuation of the detection is entrance of an object.

It is desirable that the first detector 201 and the second detector 202 are multi-layer LIDARs which form the detection ranges of a plurality of layers. If a right side boundary detection range and a left side boundary detection range can be appropriately chosen from the detection ranges of the plurality of layers created by the detectors 201 and 202 according to curvature of the guide-way, it becomes possible to appropriately cover a detection range even at a curved potion of the guide-way.

### List of Reference Signs

- 101: Guide-way transport system
- 102: Transport vehicle
- 103: Obstacle detection unit
- 104: Transport vehicle arrival/departure management means
- 105: Transport vehicle operation control means
- 106: Transport vehicle braking/driving means
- 107: Guide-way information database
- 108: Self-position estimation means
- 109: Monitoring area setting means
- 110: Detection target information database
- 111: Side boundary monitoring means
- 112: Front boundary monitoring means
- 113: Obstacle detection means
- 150: Transport vehicle departure schedule time
- 151: Transport vehicle arrival schedule time
- 152: Transport vehicle braking/driving instruction
- 153: Guide-way information
- 154: Current position of transport vehicle
- 155: Side boundary detection range
- 156: Front boundary detection range
- 157: Side detection target information
- 158: Front detection target information
- 159: Side boundary monitoring result
- 160: Front boundary monitoring result

## Claims

1. An obstacle detection system for a guide-way traveling vehicle which detects an obstacle on the guide-way based on
a signal from a first detector creating a first side boundary detection range for detecting an object entering the guide-way from a right side, and
a signal from a second detector creating a second side boundary detection range for detecting an object entering the guide-way from a left side.

2. An obstacle detection system for a guide-way traveling vehicle according to claim 1,
wherein the obstacle on the guide-way is detected based on a signal from a third detector creating a front boundary detection range in a front of a traveling direction of the guide-way.

3. An obstacle detection system for a guide-way traveling vehicle according to claim 1,
wherein the first detector and the second detector judge entrance of the object based on whether or not a known object in the side boundary detection range is detected.

4. An obstacle detection system for a guide-way traveling vehicle according to claim 3,
wherein the known object is an object to which a reflective material is applied.

5. An obstacle detection system for a guide-way traveling vehicle according to claim 1,
wherein the first detector and the second detector create detection ranges of a plurality of layers,
wherein, according to curvature of the guide-way, the first side boundary detection range is chosen from the detection ranges of the plurality of layers created by the first detector, and
wherein, according to curvature of the guide-way, the second side boundary detection range is chosen from the detection ranges of the plurality of layers created by the second detector.

6. An obstacle detecting system for a guide-way traveling vehicle according to claim 2, wherein a distance from the third detector to the front boundary range is shown by a function using a speed of the vehicle as a variable.

7. An obstacle detection system for a guide-way traveling vehicle according to claim 2,
wherein the first detector and the second detector are multi-layer LIDARs, and
wherein the third detector is a camera.

8. An obstacle detection method for a guide-way traveling vehicle,
wherein, in front of a vehicle traveling on a guide-way, a first side boundary detection range for detecting an object entering the guide-way from a right side and a second side boundary detection range for detecting an object entering the guide-way from a left side are formed, and
wherein it is judged that an obstacle has entered the guide-way when an object is detected in one of the first side boundary detection range and the second side boundary detection range.

9. An obstacle detection method for a guide-way traveling vehicle according to claim 8,
wherein a front boundary range in the front of the traveling direction of the drive-way is formed, and
wherein, by detecting an object in at least one of the front boundary range, the first side boundary detection range, and the second side boundary detection range, it is judged that an obstacle has entered a range surrounded by the front boundary range, the first side boundary detection range, and the second side boundary range.
